# EUROPEAN PATENT APPLICATION

(11) **EP 2 628 641 A1**
(43) Date of publication of application: **21.08.2013**
(21) Application number: 12177670.2
(22) Date of filing: 24.07.2012
(51) Int. Cl.: B60Q 11/00, H05B 33/08

(54) **Apparatus for detecting abnormality in an led vehicle lamp**

(30) Priority: 10.01.2012 TW 101200579
(71) Applicant: Sirius Light Technology Co., Ltd, Tainan City 701 (TW)
(72) Inventor: Huang, Cheng- Nan, 717 Tainin City (TW)
(74) Representative: Style, Kelda Camilla Karen

(57) **Abstract**

An apparatus for detecting abnormality in an LED (light-emitting diode) vehicle lamp (100) includes a detecting module (3) and a warning module (4). The LED vehicle lamp (100) includes a plurality of LEDs (101). The detecting module (3) is to be electrically coupled to the LED vehicle lamp (100) for acquiring voltage information that represents an operating voltage level of the LED vehicle lamp (100), and determines based on the voltage information thus acquired whether the LED vehicle lamp (100) may have functioned abnormally. The warning module (4) is electrically coupled to the detecting module (3) to be driven thereby to generate a warning message when the result of determination by the detecting module (3) indicates that the LED vehicle lamp (100) may have functioned abnormally.

## Description

This application claims priority of Taiwanese Application No. 101200579, filed on January 10, 2012.

This invention relates to a detecting apparatus, more particularly to an apparatus for detecting abnormality in an LED (light-emitting diode) vehicle lamp.

Due to the improvement in illuminating efficiency, LEDs have been used for vehicular illumination nowadays, for example in vehicle lamps. An LED vehicle lamp generally includes a plurality of LEDs for providing an illumination that conforms to the optical specifications required for vehicles. Even if some of the LEDs are broken, the LED vehicle lamp can still operate to emit light, making it difficult for a user to notice the existence of broken LEDs and to realize that the overall optical performance of the LED vehicle lamp has degraded and in worst cases, to an extent that it no longer conforms to the required optical specifications and may potentially threaten the safety of the user.

Therefore, the object of the present invention is to provide an apparatus for detecting abnormality in an LED vehicle lamp that can overcome the aforesaid drawback of the prior art.

According to this invention, an apparatus for detecting abnormality in an LED vehicle lamp includes a detecting module and a warning module. The LED vehicle lamp includes a plurality of LEDs.

The detecting module is to be electrically coupled to the LED vehicle lamp for acquiring voltage information representing an operating voltage level of the LED vehicle lamp, and determines based on the voltage information thus acquired whether the LED vehicle lamp may have functioned abnormally.

The warning module is electrically coupled to the detecting module to be driven thereby to generate a warning message when the result of determination by the detecting module indicates that the LED vehicle lamp may have functioned abnormally.

Other features and advantages of the present invention will become apparent in the following detailed description of the preferred embodiment of this invention, with reference to the accompanying drawings, in which:
Fig. 1 is a block diagram of the preferred embodiment of an apparatus for detecting abnormality in an LED vehicle lamp according to this invention;
Fig. 2 is a circuit diagram of a detecting module of the preferred embodiment; and
Fig. 3 is a schematic block diagram of a practical example of an assembly of a plurality of the apparatuses and a plurality of LED vehicle lamps.

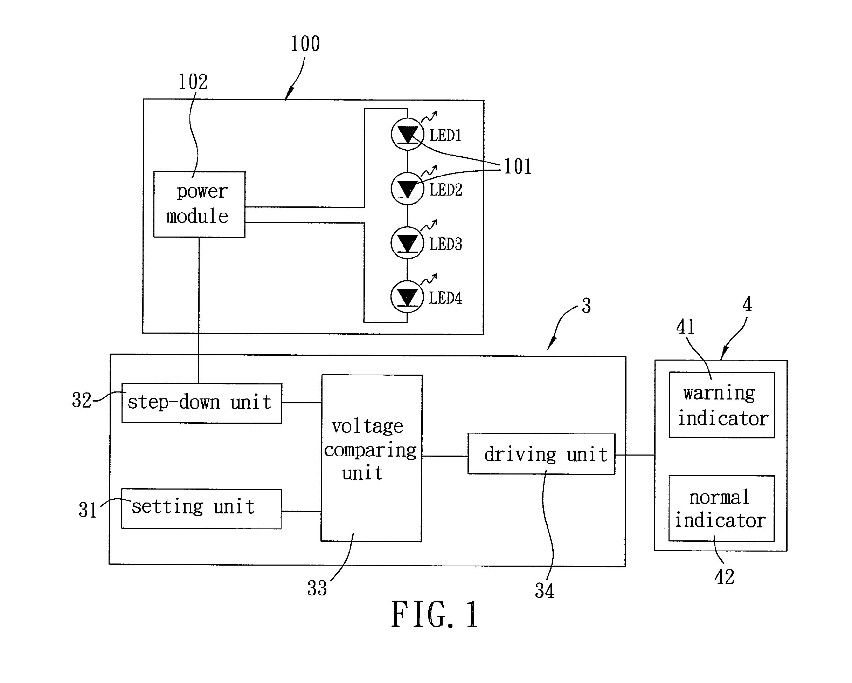

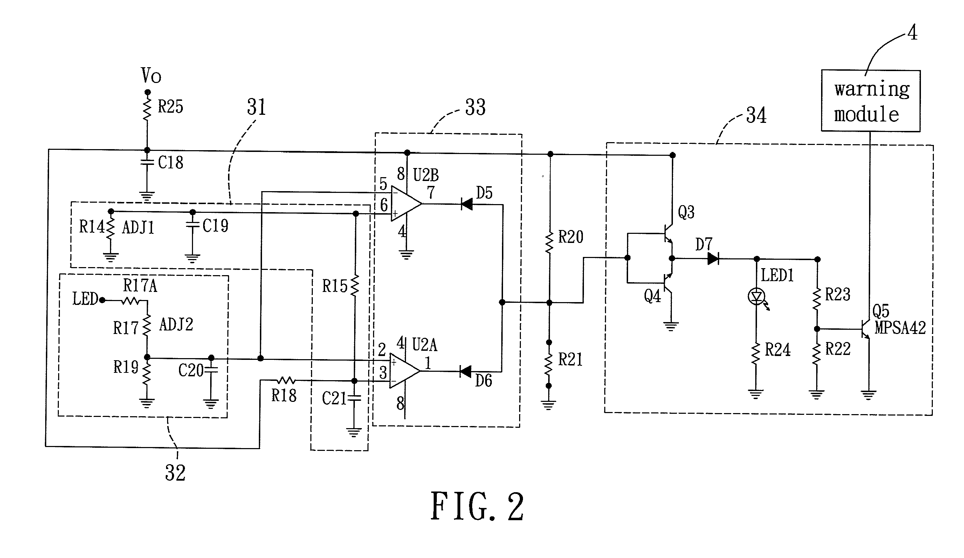

Figs. 1 and 2 show the preferred embodiment of an apparatus for detecting abnormality in an LED vehicle lamp 100 according to the present invention. The LED vehicle lamp 100 includes a plurality of LEDs 101 and a power module 102 for driving the LEDs 101.

The apparatus may be synchronously turned on with the LED vehicle lamp 100 and is used to detect whether the LEDs 101 of the vehicle lamp 100 may have functioned abnormally, and to notify a user of the result of detection. Accordingly, the apparatus includes a detecting module 3 and a warning module 4.

The detecting module 3 is to be electrically coupled to the LED vehicle lamp 100 for acquiring voltage information that represents an operating voltage level of the LED vehicle lamp 100, and determines based on the voltage information thus acquired whether the LED vehicle lamp 100 may have functioned abnormally. The voltage information may indicate abnormality if at least one of the LEDs 101 of the LED vehicle lamp 100 is damaged. With the LEDs 101 varying in forward biasing voltages, a normal operating voltage level of an LED vehicle lamp 100 constituted by four LEDs 101 generally ranges from 13 volts to 16 volts. If the voltage information indicates that the operating voltage level of the LED vehicle lamp 100 is lower than 13 volts or higher than 16 volts, the LEDs 101 of the LED vehicle lamp 100 may have functioned abnormally (e.g., one of the LEDs 101 is broken), and require further inspection. The further away the operating voltage level is from the normal operating voltage level, the more LEDs 101 are likely to have functioned abnormally.

The detecting module 3 includes a setting unit 31, a step-down unit 32, a voltage comparing unit 33, and a driving unit 34 that is electrically coupled to the voltage comparing unit 33.

The setting unit 31 is for user input of first and second predetermined thresholds, which may be made depending on the type/characteristic of the LED vehicle lamp 100 (e. g. , the number and type of the LEDs 101 of the LED vehicle lamp 100). In this embodiment, the first and second predetermined thresholds are respectively lower and upper limits indicating normal operation of the LED vehicle lamp 100, and thus the first predetermined threshold is smaller than the second predetermined threshold.

The step-down unit 32 is to be electrically coupled to the LED vehicle lamp 100, receives the operating voltage level of the LED vehicle lamp 100, and performs a step-down operation on the operating voltage level so as to obtain the voltage information.

The voltage comparing unit 33 is electrically coupled to the setting unit 31 for receiving the first and second predetermined thresholds therefrom, and to the step-down unit for receiving the voltage information therefrom. The voltage comparing unit 33 determines that the LED vehicle lamp 100 may have functioned abnormally when the voltage information is smaller than the first predetermined threshold, or when the voltage information is greater than the second predetermined threshold. In this embodiment, the voltage comparing unit 33 further determines that the LED vehicle lamp 100 functions normally when the voltage information falls between the first and second predetermined thresholds.

In this embodiment, the voltage comparing unit 33 includes first and second operational amplifier comparators U2A, U2B. Referring to Fig. 2, the first operational amplifier comparator U2A has an inverting input that is electrically coupled to the setting unit 31 for receiving the first predetermined threshold therefrom and a non-inverting input that is electrically coupled to the step-down unit 32 for receiving the voltage information therefrom, and outputs a signal indicating abnormality when the voltage information is smaller than the first predetermined threshold. The second operational amplifier comparator U2B has an inverting input that is electrically coupled to the step-down unit 32 for receiving the voltage information therefrom and a non-inverting input that electrically coupled to the setting unit 31 for receiving the second predetermined threshold therefrom, and outputs a signal indicating abnormality when the voltage information is greater than the second predetermined threshold.

The driving unit 34 is electrically coupled to the voltage comparing unit 33, and generates a first driving signal when the voltage comparing unit 33 determines that the LED vehicle lamp 100 may have functioned abnormally. The driving unit 34 further generates a second driving signal when the voltage comparing unit 33 determines that the LED vehicle lamp 100 functions normally. In this embodiment, the driving unit 34 generates the first driving signal when the first or second operational amplifier comparator U2A, U2B outputs the signal indicating abnormality.

The warning module 4 is coupled electrically to the driving unit 34 of the detecting module 3 to be driven thereby to generate a warning message. Specifically, the warning module 4 includes a warning indicator 41 and a normal indicator 42 disposed inside a vehicle equipped with the LED vehicle lamp 100. The warning indicator 41 is driven by the first driving signal to generate the warning message for notifying a driver of the vehicle to inspect the LED vehicle lamp 100, and the normal indicator 42 is driven by the second driving signal to generate a normal message for notifying the driver that the LED vehicle lamp 100 functions properly. In the preferred embodiment, the warning indicator 41 and the normal indicator 42 are each a light-emitting object that emits light of a predetermined color. In practice, the warning indicator 41 and the normal indicator 42 can be implemented using an image display, anaudioalarm, the light-emitting obj ect, or combinations of the above.

In the preferred embodiment, the setting unit 31 and the step-down unit 32 are respectively implemented by voltage dividing circuits ADJ1 and ADJ2 as shown in Fig. 2, and the voltage comparing unit 33 is implemented by the first and second operational amplifier comparators U2A, U2B. However, since voltage division and voltage stepping-down may be implemented by various circuits, and voltage comparison may be implemented by logical circuits and electrical circuits other than operational amplifier comparators, in practice, implementation of the detecting module 3 is not limited to the disclosed embodiment.

According to this invention, the driver can be immediately notified of potential abnormality in the operation of the LED vehicle lamp 100 through the warning message that is generated by the warning indicator 41 and know to perform further inspections on the LED vehicle lamp 100 so as to promote driving safety.

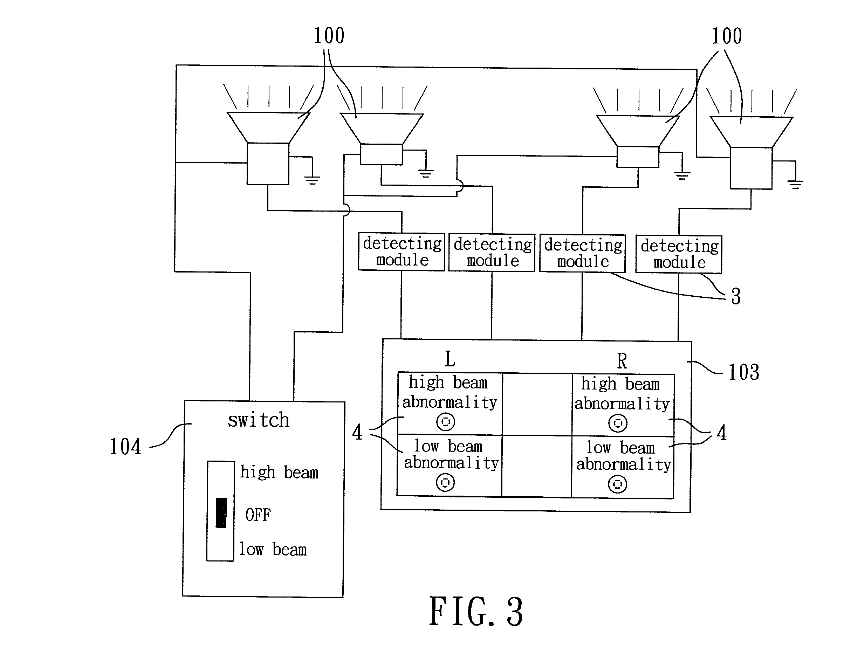

Referring to Fig. 3, in practice, for a vehicle having high beam LED headlamps and low beam LED headlamps, multiple apparatuses according to this invention may be provided for respectively detecting abnormality in the high and low beam LED headlamps. In addition, the warning modules 4 of these apparatuses may be integrated and disposed at the dashboard 103 for convenient observation by the driver.

It should be noted that in practice, the voltage comparing unit 33 may only determine whether the voltage information is smaller than the first predetermined threshold, and the normal indicator 42 may be omitted in the warning module 4.

While the present invention has been described in connection with what is considered the most practical and preferred embodiment, it is understood that this invention is not limited to the disclosed embodiment but is intended to cover various arrangements included within the spirit and scope of the broadest interpretation so as to encompass all such modifications and equivalent arrangements.

## Claims

1. An apparatus for detecting abnormality in an LED (light-emitting diode)'vehicle lamp (100) that includes a plurality of LEDs (101), said apparatus **characterized by**:
a detecting module (3) to be electrically coupled to the LED vehicle lamp (100) for acquiring voltage information representing an operating voltage level of the LED vehicle lamp (100), and determining based on the voltage information thus acquired whether the LED vehicle lamp (100) may have functioned abnormally;
a warning module (4) electrically coupled to said detecting module (3) to be driven thereby to generate a warning message when the result of determination by said detecting module (3) indicates that the LED vehicle lamp (100) may have functioned abnormally.

2. The apparatus as claimed in Claim 1, **characterized in that** said detecting module (3) includes:
a voltage comparing unit (33) for comparing the voltage information with a first predetermined threshold, and determining that the LED vehicle lamp (100) may have functioned abnormally when the voltage information is smaller than the first predetermined threshold; and
adrivingunit (34) coupled electrically to said voltage comparing unit (33), and generating a first driving signal when said voltage comparing unit (33) determines that the LED vehicle lamp (100) may have functioned abnormally; and
**characterized in that** said warningmodule (4) is coupled electrically to said driving unit (34) to be driven by the first driving signal to generate the warning message.

3. The apparatus as claimed in Claim 2, **characterized in that** said detecting module (3) further includes a step-down unit (32) to be electrically coupled between the LED vehicle lamp (100) and said voltage comparing unit (33), receiving the operating voltage level of the LED vehicle lamp (100), and performing a step-down operation on the operating voltage level so as to obtain the voltage information.

4. The apparatus as claimed in Claim 2, **characterized in that** said voltage comparing unit (33) further compares the voltage information with a second predetermined threshold, and determines that the LED vehicle lamp (100) may have functioned abnormally when the voltage information is greater than the second predetermined threshold.

5. The apparatus as claimed in Claim 4, **characterized in that** said detecting module (3) further includes a setting unit (31) for user input of the first and second predetermined thresholds.

6. The apparatus as claimed in Claim 4, wherein said voltage comparing unit (33) further determines that the LED vehicle lamp (100) functions normally when the voltage information falls between the first and second predetermined thresholds, said driving unit (34) further generates a second driving signal when said voltage comparing unit (33) determines that the LED vehicle lamp (100) functions normally, said warning module (4) being driven by the second driving signal to generate a normal message.

7. The apparatus as claimed in Claim 6, **characterized in that** said warning module (4) includes a warning indicator (41) to be driven by the first driving signal to generate the warning message, and a normal indicator (42) to be driven by the second driving signal to generate the normal message.

8. The apparatus as claimed in Claim 4, **characterized in that** said voltage comparing unit (33) includes a first operational amplifier comparator (U2A) having an inverting input for receiving the first predetermined threshold and a non-inverting input for receiving the voltage information, and second operational amplifier comparator (U2B) having a non-inverting input for receiving the second predetermined threshold and an inverting input for receiving the voltage information.
